(19) Europäisches Patentamt
European Patent Office
Office européen des brevets

(11) EP 3 923 200 A1

(12) EUROPEAN PATENT APPLICATION

(43) Date of publication:
15.12.2021 Bulletin 2021/50

(51) Int Cl.:
G06N 3/04 (2006.01)
G05D 1/02 (2020.01)
G06N 3/08 (2006.01)

(21) Application number: 20465534.4

(22) Date of filing: 09.06.2020

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Elektrobit Automotive GmbH
91058 Erlangen (DE)

(72) Inventors:
• Ginerica, Cosmin
65824 Schwalbach a. Ts. (DE)
• Grigorescu, Sorin Mihai
65824 Schwalbach a. Ts. (DE)

(74) Representative: Continental Corporation
c/o Continental Teves AG & Co. OHG
Intellectual Property
Guerickestraße 7
60488 Frankfurt a. Main (DE)

(54) **PREDICTION OF FUTURE SENSORY OBSERVATIONS OF A DISTANCE RANGING DEVICE**

(57) The present invention is related to a method, a computer program code, and an apparatus for predicting future sensory observations of a distance ranging device of an autonomous or semi-autonomous vehicle. The invention is further related to an autonomous driving controller using such a method or apparatus and to an autonomous or semi-autonomous vehicle comprising such an autonomous driving controller. In a first step, a sequence of previous sensory observations and a sequence of control actions are received (S1). The sequence of previous sensory observations and the sequence of control actions are then processed (S2) with a temporal neural network to generate a sequence of predicted future sensory observations. Finally, the sequence of predicted future sensory observations is output (S3) for further use.

EP 3 923 200 A1

```
Receive sequences of previous sensory          S1
observations and control actions

          ↓

Process the sequences to generate              S2
a sequence of predicted
future sensory observations

          ↓

Output the sequence of predicted               S3
future sensory observations
```

FIG. 1

**Description**

The present invention is related to a method, a computer program code, and an apparatus for predicting future sensory observations of a distance ranging device of an autonomous or semi-autonomous vehicle. The invention is further related to an autonomous driving controller using such a method or apparatus and to an autonomous or semi-autonomous vehicle comprising such an autonomous driving controller.

Recent advances in the area of deep learning and artificial intelligence have backed up the increasingly rapid progress of the autonomous driving domain. Autonomous vehicles are robotic systems that can guide themselves without human operators. Such vehicles are equipped with artificial intelligence components and are expected to change the future of mobility in a significant manner, bringing a variety of benefits into everyday life, such as making driving easier, improving the capacity of road networks, and reducing vehicle-related accidents. In order to produce a collision-free route and decide the next actions based on it, the vehicle should consider all the threats, which are present in the surrounding environment.

Ensuring safety is a top priority for autonomous driving and advanced driver assistance systems. When the vehicle is driving, it encounters various dynamic traffic situations, in which the moving objects around it could be a potential threat to safe driving. Obstacle avoidance is thus an important step in autonomous vehicle navigation. In order to produce a collision-free route and decide the next actions based on it, the vehicle should consider all the threats, which are present in the surrounding environment.

In this regard, WO 2015/144410 A1 discloses a device for predicting driving state transitions of a vehicle. The device comprises an acquisition device for acquiring driving data, a calculation device, and a data transmission device for transmitting the driving data to the calculation device. The calculation device is designed to calculate probability values for the transitioning of the vehicle into future driving states from a finite quantity of driving states of the vehicle, based on the driving data and transition conditions between the finite quantity of driving states of the vehicle.

Due to the complexity of the problems that need to be handled by autonomous driving algorithms, deep learning models have been employed to aid in solving them. For example, in end-to-end learning [1] a complex neural network is developed and trained in order to directly map input sensory data to vehicle commands. Training is usually performed with image data along with vehicle state information. Another approach used in autonomous vehicle control is deep reinforcement learning [2], where an agent is learning a desired behavior with the aid of an action-reward system. A further technique used in modern learning-based architectures is self-supervised learning [3]. Self-supervised learning makes use of algorithms that are capable of learning independently, without the need of human intervention in the form of manual data annotation. Another approach is unsupervised learning. For example, in [4] unsupervised learning is implemented using a predictive neural network that explores the prediction of future frames in a given video sequence, with the goal of learning the structure of the visual world. Reinforcement learning is also the base of [5], where the prediction of observations is used for the purpose of environmental discovery as part of the action-reward paradigm.

It is an object of the present invention to provide a solution for providing information that is suitable for supporting creation of an optimized trajectory by a path planning module.

This object is achieved by a method according to claim 1, by a computer program code according to claim 11, which implements this method, and by an apparatus according to claim 12. The dependent claims include advantageous further developments and improvements of the present principles as described below.

According to a first aspect, a method for predicting future sensory observations of a distance ranging device of an autonomous or semi-autonomous vehicle comprises the steps of:

-    receiving a sequence of previous sensory observations and a sequence of control actions;
-    processing the sequence of previous sensory observations and the sequence of control actions with a temporal neural network to generate a sequence of predicted future sensory observations; and
-    outputting the sequence of predicted future sensory observations.

Accordingly, a computer program code comprises instructions, which, when executed by at least one processor, cause the at least one processor to perform the following steps for predicting future sensory observations of a distance ranging device of an autonomous or semi-autonomous vehicle:

-    receiving a sequence of previous sensory observations and a sequence of control actions;
-    processing the sequence of previous sensory observations and the sequence of control actions with a temporal neural network to generate a sequence of predicted future sensory observations; and
-    outputting the sequence of predicted future sensory observations.

The term computer has to be understood broadly. In particular, it also includes electronic control units, embedded devices and other processor-based data processing devices.

The computer program code can, for example, be made available for electronic retrieval or stored on a computer-readable storage medium.

According to another aspect, an apparatus for predicting future sensory observations of a distance ranging device of an autonomous or semi-autonomous vehicle comprises:

- an input configured to receive a sequence of previous sensory observations and a sequence of control actions;
- a temporal neural network configured to process the sequence of previous sensory observations and the sequence of control actions to generate a sequence of predicted future sensory observations; and
- an output configured to output the sequence of predicted future sensory observations.

According to the invention, a neural network-based architecture is used for estimating a sensory output of a vehicle at future time steps. The neural network uses not only previous sensory observations as input of an estimator, but also vehicle actions. In this way, a more accurate prediction of future observations is achieved. The described solution enhances the environmental perception of the vehicle, e.g. by providing moving obstacle information to a local path planner module or trajectory planner. This helps to optimize the output trajectory. Basing the self-supervised setup on active range sensing makes the solution less sensible to perturbations than solutions based on image data. Nonetheless, the solution can likewise be implemented when cameras are used as passive range sensing devices.

In an advantageous embodiment, the temporal neural network uses a gated recurrent unit. A gated recurrent unit is a neural network layer that handles sequences of data. The gated recurrent unit acts as the algorithm's memory, aiming to encode and remember previous states, while solving the vanishing gradient problem. It builds a hidden model of the environment in order to predict future frames based on historical data and the set of actions of the ego vehicle.

In an advantageous embodiment, an observation input layer of the temporal neural network is a first multi-layer perceptron. For example, the first multi-layer perceptron may use three dense layers and rectified linear unit activations. Similarly, in an advantageous embodiment, an action input layer of the temporal neural network is a second multi-layer perceptron. For example, the second multi-layer perceptron may use rectified linear unit activations. Using multi-layer perceptrons has the advantage that they are computationally efficient, as they can easily be parallelized. Furthermore, multi-layer perceptrons can be faster to evaluate on data than more complex layer types.

In an advantageous embodiment, the temporal neural network uses lambda layers for splitting the action input layer at a desired timestep. Each predictor of the temporal neural network requires a slice of a specific length from the action input layer. Such slices can efficiently be provided by lambda layers.

In an advantageous embodiment, predictors of the temporal neural network are multi-layer perceptrons with two layers. Again, this has the advantage that multi-layer perceptrons are computationally efficient. For example, the hidden layer may have 100 units, which has proven to yield a good performance, while the number of units of the output layer is equal to the size of an observation.

In an advantageous embodiment, the temporal neural network uses batch normalization layers for performing a normalization of previous activations of a layer. These allow coping efficiently with large variations of the input data or variations in the dense layers of the predictors. For example, the batch normalization layers may perform a normalization of the previous activations of a layer by subtracting the batch mean and dividing by the standard deviation of the batch.

In an advantageous embodiment, the distance ranging device is one of an ultrasonic sensor, a laser scanner, a lidar sensor, a radar sensor, and a camera. Such sensors are often already available in vehicles for other purposes. Using them for implementing the present solution thus reduces the cost of implementation.

Advantageously, an autonomous driving controller comprises an apparatus according to the invention or is configured to perform a method for predicting future sensory observations of a distance ranging device of an autonomous or semi-autonomous vehicle. Preferably, an autonomous or semi-autonomous vehicle comprises such an autonomous driving controller. In this way, an improved autonomous driving behavior in different driving scenarios is achieved. For example, the prediction of future sensory observations can be used by a local path planning module of an autonomous vehicle to produce better trajectories, as opposed to simple path planning. Furthermore, the prediction of moving obstacles can aid in collision avoidance systems

Further features of the present invention will become apparent from the following description and the appended claims in conjunction with the figures.

Figures

Fig. 1    schematically illustrates a method for predicting future sensory observations of a distance ranging device of an autonomous or semi-autonomous vehicle;

Fig. 2    schematically illustrates a first embodiment of an apparatus for predicting future sensory observations of a distance ranging device of an autonomous or semi-autonomous vehicle;

Fig. 3    schematically illustrates a second embodiment of an apparatus for predicting future sensory observations of a distance ranging device of an autonomous or semi-autonomous vehicle;

Fig. 4    schematically illustrates a motor vehicle in which a solution according to the invention is implemented;

Fig. 5    depicts a block diagram of a basic neural network architecture for predicting future sensory observations of a distance ranging device; and

Fig. 6    depicts the full network architecture.

Detailed description

The present description illustrates the principles of the present disclosure. It will thus be appreciated that those skilled in the art will be able to devise various arrangements that, although not explicitly described or shown herein, embody the principles of the disclosure.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the diagrams presented herein represent conceptual views of illustrative circuitry embodying the principles of the disclosure.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a combination of circuit elements that performs that function or software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

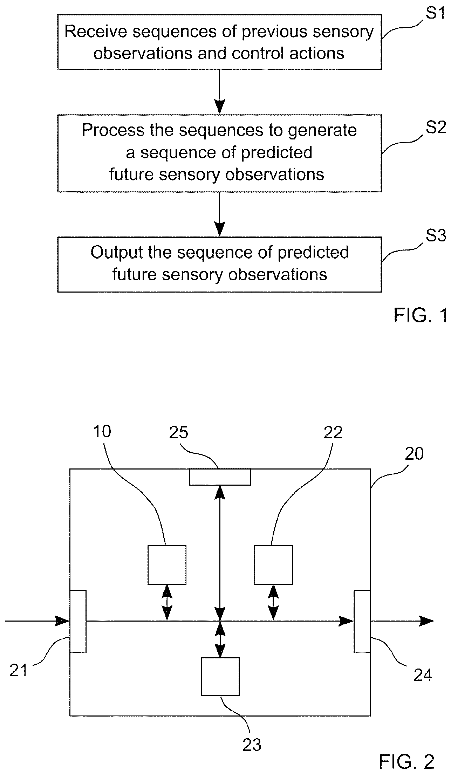

Fig. 1 schematically illustrates a method according to the invention for predicting future sensory observations of a distance ranging device of an autonomous or semi-autonomous vehicle. For example, the distance ranging device may be one of an ultrasonic sensor, a laser scanner, a lidar sensor, a radar sensor, and a camera. In a first step, a sequence of previous sensory observations and a sequence of control actions are received S1. The sequence of previous sensory observations and the sequence of control actions are then processed S2 with a temporal neural network to generate a sequence of predicted future sensory observations. Finally, the sequence of predicted future sensory observations is output S3 for further use. Preferably, the temporal neural network uses a gated recurrent unit. An observation input layer, an action input layer, and predictors of the temporal neural network may be implemented as multi-layer perceptrons. Lambda layers or batch normalization layers may be provided. The lambda layers can be used for splitting the action input layer at a desired timestep, whereas the batch normalization layers may perform a normalization of previous activations of a layer.

Fig. 2 schematically illustrates a block diagram of a first embodiment of an apparatus 20 according to the invention for predicting future sensory observations of a distance ranging device of an autonomous or semi-autonomous vehicle. For example, the distance ranging device may be is one of an ultrasonic sensor, a laser scanner, a lidar sensor, a radar sensor, and a camera. The apparatus 20 has an input 21 via which a sequence of previous sensory observations and a sequence of control actions may be received. A temporal neural network 10 then processes sequence of previous sensory observations and the sequence of control actions to generate a sequence of predicted future sensory observations. The sequence of predicted future sensory observations generated by the temporal neural network 10 may be provided for further use via an output 24. A local storage unit 23 is provided, e.g. for storing data during processing. The output 24 may also be combined with the input 21 into a single bidirectional interface. Preferably, the temporal neural network 10 uses a gated recurrent unit. An observation input layer, an action input layer, and predictors of the temporal neural network 10 may be implemented as multi-layer perceptrons. Lambda layers or batch normalization layers may be provided. The lambda layers can be used for splitting the action input layer at a desired timestep, whereas the batch normalization layers may perform a normalization of previous activations of a layer.

The temporal neural network 10 may be controlled by a controller 22. A user interface 25 may be provided for enabling a user to modify settings of the temporal neural network 10 or the controller 22. The temporal neural network 10 and the controller 22 can be embodied as dedicated hardware units. Of course, they may likewise be fully or partially combined into a single unit or implemented as software running on a processor, e.g. a CPU or a GPU.

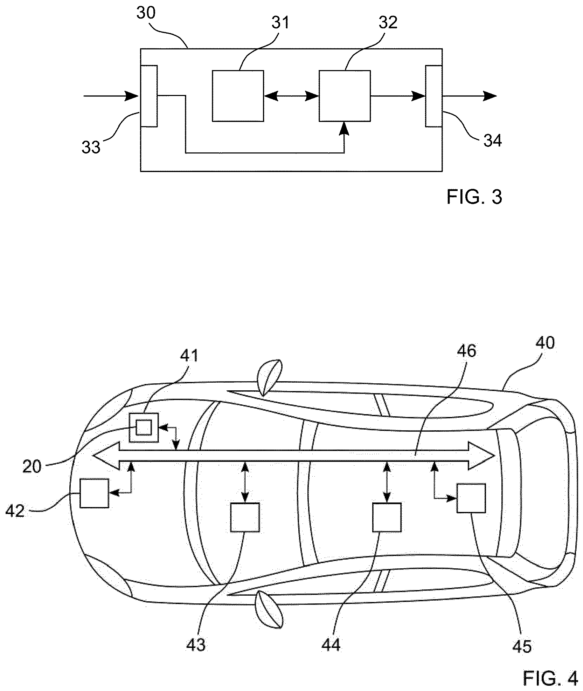

A block diagram of a second embodiment of an apparatus 30 according to the invention for predicting future sensory observations of a distance ranging device of an autonomous or semi-autonomous vehicle is illustrated in Fig. 3. The apparatus 30 comprises a processing device 32 and a memory device 31. For example, the apparatus 30 may be a computer, an electronic control unit or an embedded system. The memory device 31 has stored instructions that, when executed by the processing device 32, cause the apparatus 30 to perform steps according to one of the described methods. The instructions stored in the memory device 31 thus tangibly embody a program of instructions executable by the processing device 32 to perform program steps as described herein according to the present principles. The apparatus 30 has an input 33 for receiving data. Data generated by the processing device 32 are made available via an output 34. In addition, such data may be stored in the memory device 31. The input 33 and the output 34 may be combined into a single bidirectional interface.

The processing device 32 as used herein may include one or more processing units, such as microprocessors, digital signal processors, or a combination thereof.

The local storage unit 23 and the memory device 31 may include volatile and/or non-volatile memory regions and storage devices such as hard disk drives, optical drives, and/or solid-state memories.

Fig. 4 schematically shows an autonomous or semi-autonomous motor vehicle 40, in which a solution in accordance with the invention is implemented. The motor vehicle 40 has an autonomous driving controller 41, which comprises an apparatus 20 for predicting future sensory observations of a distance ranging device. The motor vehicle 40 further has at least one distance ranging device 42, which is able to collect environment data. The distance ranging device 42 may in particular include ultrasonic sensors, laser scanners, lidar sensors, radar sensors, or cameras. Further components of the motor vehicle 40 in this example are a navigation system 43 as well as a data transmission unit 44. By means of the data transmission unit 44 a connection to a backend can be established, e.g. to receive updated program code. A memory 45 is available for storing data. The data exchange between the different components of the motor vehicle 40 takes place via a network 46.

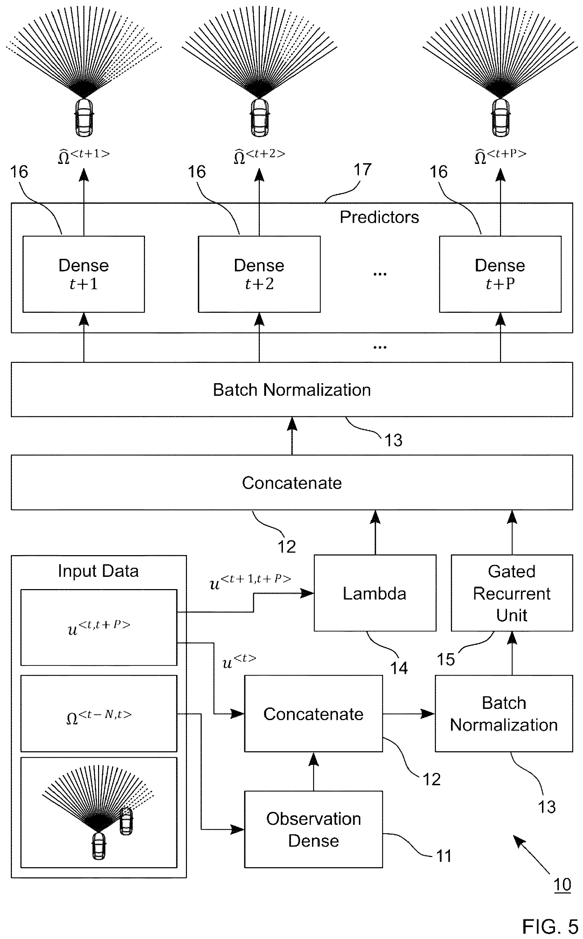

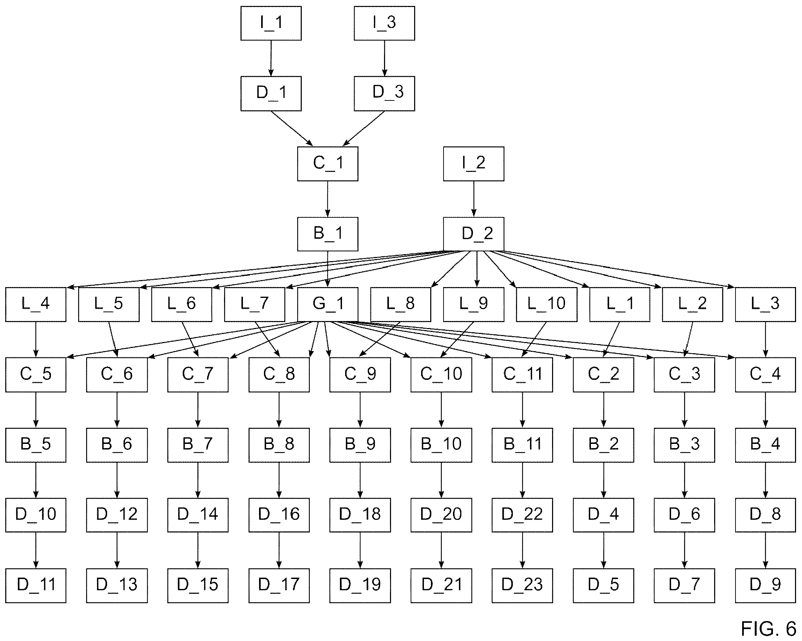

In the following, further details of the invention shall be given with reference to Fig. 5 and Fig. 6.

Throughout this document, the following notation is used. The value of a variable is defined either for a single discrete time step $t$, written as superscript $< t >$, or as a discrete sequence defined in the $< t, t + k >$ time interval, where $k$ represents the length of the sequence. For example, the value of a control action $u$ is defined either at discrete time $t$ as $u^{<t>}$, or within a sequence interval $u^{<t,t+k>}$.

A block diagram of a basic architecture of a neural network 10 for predicting future sensory observations of a distance ranging device is shown in Fig. 5. The core algorithm for predicting future observations is a temporal neural network 10 comprising a gated recurrent unit 15, as described by K. Cho et al. [6], which is a neural network layer that handles sequences of data. The temporal neural network 10 has sequences of previous observations $\Omega^{<t-N,t>}$ and control actions $u^{<t,t+P>}$ as inputs, where $N$ is the length of the sequence of past observations and $P$ in the size of the prediction horizon, i.e. the desired number of future steps to be predicted. The output function of the gated recurrent unit 15 produces a belief state signal, which feeds input to a sequence of dense, fully connected, layers.

The observation input layer is a multi-layer perceptron with three dense layers 11 and rectified linear unit (ReLU) activations. Also the action input layer is a multi-layer perceptron with rectified linear unit activations. For example, 256 units may be used inside the gated recurrent unit 15. The predictors 17 preferably are multi-layer perceptrons with two layers, where the hidden layer may have 100 units, while the output layer has $L$ units, $L$ being the size of an observation, e.g. the dimension of an ultrasonic sensor array.

Due to large variations of the input data, as well as variations in the predictor's 17 dense layers 16, batch normalization layers 13 are provided. The batch normalization layers 13 perform a normalization of the previous activations of a layer by subtracting the batch mean and dividing by the standard deviation of the batch:

$$\mu_B = \frac{1}{m}\sum_{i=1}^{m} x_i$$

$$\sigma_B^2 = \frac{1}{m}\sum_{i=1}^{m}(x_i - \mu_B)^2 \qquad (1)$$

$$\hat{x}_i = \frac{x_i - \mu_B}{\sqrt{\sigma_B^2 + \epsilon}}$$

$$y_i = \gamma \hat{x}_i + \beta,$$

where $\mu_B$ is the mean of the batch, $\sigma_B^2$ is the variance of the batch, and $m$ is the size of the batch. $\hat{x}_i$ is the normalized value and $y_i$ is the shifted and scaled output of the batch normalization layer 13. $\epsilon$ is a small floating point value to avoid a division by zero. $\gamma$ and $\beta$ are specific parameters of a batch normalization layer, which are learned during training.

Lambda layers 14 are used for splitting the action input layer at timestep $t + p$, where $p \in P$ is the index in the prediction interval $[t + 1, t + P]$. For each predictor 17, corresponding to frame $t + p$, a slice of length p from the action input layer is required:

$$u_p^{<t+p>} = u^{<t+1,t+p>}, p \in P. \qquad (2)$$

Concatenation layers 12 concatenate outputs of two or more layers.

The gated recurrent unit 15 acts as the algorithm's memory, aiming to encode and remember previous states, while solving the vanishing gradient problem. It builds a hidden model of the environment in order to predict future frames based on historical data and the set of actions of the ego vehicle:

$$z_t = \sigma_g(W_z x_t + U_z h_{t-1} + b_z), \qquad (3)$$

$$r_t = \sigma_g(W_r x_t + U_r h_{t-1} + b_r), \qquad (4)$$

$$h_t = (1 - z_t) \circ h_{t-1} + z_t \circ \sigma_h(W_h x_t + U_h(r_t \circ h_{t-1}) + b_h), \qquad (5)$$

where $x_t$, $h_t$, $z_t$ and $r_t$ are the input, output, update gate and reset gate vectors, respectively. $W$, $U$, and $b$ are the weight matrices of the gated recurrent unit 15.

The full network architecture is illustrated in Fig. 6. Depicted are the input layers I_1-I_3, the various dense layers D_1-D_23, the concatenation layers C_1-C_11, the batch normalization layers B_1-B_11, the lambda layers L_1-L_10, and the gated recurrent unit G_1, as well as their connections.

The described architecture was trained as a self-supervised fashion using the Adam optimizer [7], with a learning rate of 0.0005 and the goal of minimizing a mean squared error loss function. The system was trained with tuples $\{(\Omega^{<t-N,t>}, u^{<t,t+N>}), \Omega^{<t+1,t+P>}\}$, where $(\Omega^{<t-N,t>}, u^{<t,t+N>})$ are inputs, i.e. sequences of historic observations and control actions, and $\Omega^{<t+1,t+P>}$ are the desired future observations that should be predicted by the algorithm. It has been experimentally found that the algorithm outperforms similar algorithms, e.g. the algorithm described by M. G. Azar et al. [5].

**References**

[1] M. Bojarski et al.: "End to end learning for self-driving cars", arXiv: 1604.07316 (2016) (https://arxiv.org/abs/1604.07316).

[2] V. Mnih et al.: "Human-level control through deep reinforcement learning", Nature, Vol. 518 (2015), pp. 529-533.

[3] R. Hadsell et al.: "Learning long-range vision for autonomous off-road driving", Journal of Field Robotics, Vol. 26 (2009), pp. 120-144.

[4] W. Lotter et al.: "Deep predicting coding networks for video prediction and unsupervised learning", arXiv: 1605.08104 (2016) (https://arxiv.org/abs/1605.08104).

[5] M. G. Azar et al.: "World discovery models", arXiv:1902.07685, (2019) (https://arxiv.org/abs/1902.07685).

[6] K. Cho et al.: "Learning Phrase Representations using RNN Encoder-Decoder for Statistical Machine Translation", arXiv: 1406.1078 (2014) (https://arxiv.org/abs/1406.1078).

[7] D. P. Kingma et al.: "Adam: A Method for Stochastic Optimization", arXiv: 1412.6980 (2014) (https://arxiv.org/abs/1412.6980).

**Claims**

1. A method for predicting future sensory observations ($\hat{\Omega}^{<t,t+P>}$) of a distance ranging device (42) of an autonomous or semi-autonomous vehicle (40), the method comprising:

   - receiving (S1) a sequence of previous sensory observations ($\Omega^{<t-N,t>}$) and a sequence of control actions ($u^{<t,t+P>}$);
   - processing (S2) the sequence of previous sensory observations ($\Omega^{<t-N,t>}$) and the sequence of control actions ($u^{<t,t+P>}$) with a temporal neural network (10) to generate a sequence of predicted future sensory observations ($\hat{\Omega}^{<t,t+P>}$); and
   - outputting (S3) the sequence of predicted future sensory observations ($\hat{\Omega}^{<t,t+P>}$).

2. The method according to claim 1, wherein the temporal neural network (10) uses a gated recurrent unit (15).

3. The method according to claim 1 or 2, wherein an observation input layer of the temporal neural network (10) is a first multi-layer perceptron.

4. The method according to claim 3, wherein the first multi-layer perceptron uses three dense layers (11) and rectified linear unit activations.

5. The method according to one of the preceding claims, wherein an action input layer of the temporal neural network (10) is a second multi-layer perceptron.

6. The method according to claim 5, wherein the second multi-layer perceptron uses rectified linear unit activations.

7. The method according to claim 5 or 6, wherein the temporal neural network (10) uses lambda layers (14) for splitting the action input layer at a desired timestep.

8. The method according to one of the preceding claims, wherein predictors (17) of the temporal neural network (10) are multi-layer perceptrons with two layers.

9. The method according to one of the preceding claims, wherein the temporal neural network (10) uses batch normalization layers (13) for performing a normalization of previous activations of a layer.

10. The method according to one of the preceding claims, wherein the distance ranging device (42) is one of an ultrasonic sensor, a laser scanner, a lidar sensor, a radar sensor, and a camera.

11. A computer program code comprising instructions, which, when executed by at least one processor, cause the at least one processor to perform a method according to any of claims 1 to 10 for predicting future sensory observations ($\hat{\Omega}^{<t,t+P>}$) of a distance ranging device (42) of an autonomous or semi-autonomous vehicle (40).

12. An apparatus (20) for predicting future sensory observations ($\hat{\Omega}^{<t,t+P>}$) of a distance ranging device (42) of an autonomous or semi-autonomous vehicle (40), the apparatus (20) comprising:

 - an input (21) configured to receive (S1) a sequence of previous sensory observations ($\Omega^{<t-N,t>}$) and a sequence of control actions ($u^{<t,t+P>}$);
 - a temporal neural network (10) configured to process (S2) the sequence of previous sensory observations ($\Omega^{<t-N,t>}$) and the sequence of control actions ($u^{<t,t+P>}$) to generate a sequence of predicted future sensory observations ($\hat{\Omega}^{<t,t+P>}$); and
 - an output (24) configured to output (S3) the sequence of predicted future sensory observations ($\hat{\Omega}^{<t,t+P>}$).

13. An autonomous driving controller (41), **characterized in that** the autonomous driving controller (41) comprises an apparatus (20) according to claim 12 or is configured to perform a method according to any of claims 1 to 10 for predicting future sensory observations ($\hat{\Omega}^{<t,t+P>}$) of a distance ranging device (42) of an autonomous or semi-autonomous vehicle (40).

14. An autonomous or semi-autonomous vehicle (40), **characterized in that** the autonomous or semi-autonomous vehicle (40) comprises an autonomous driving controller (41) according to claim 13.

Receive sequences of previous sensory
observations and control actions

$S1$

Process the sequences to generate
a sequence of predicted
future sensory observations

$S2$

Output the sequence of predicted
future sensory observations

$S3$

FIG. 1

FIG. 2

FIG. 3

FIG. 4

FIG. 5

FIG. 6

Europäisches
Patentamt

European
Patent Office

Office européen
des brevets

# EUROPEAN SEARCH REPORT

Application Number

EP 20 46 5534

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2018/211141 A1 (DEEPMIND TECH LTD [GB]) 22 November 2018 (2018-11-22) * abstract * * paragraph [0012] - paragraph [0045] * ----- | 1-14 | INV. G06N3/04 G06N3/08 G05D1/02 |
| A | US 2020/148215 A1 (MOHAJERIN NIMA [CA] ET AL) 14 May 2020 (2020-05-14) * abstract * * paragraph [0003] - paragraph [0008] * * paragraph [0070] * * paragraph [0105] - paragraph [0106] * ----- | 1-14 | |

TECHNICAL FIELDS
SEARCHED (IPC)

G06N

The present search report has been drawn up for all claims

| Place of search | Date of completion of the search | Examiner |
|---|---|---|
| The Hague | 1 December 2020 | Papadakis, Georgios |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 20 46 5534

This annex lists the patent family members relating to the patent documents cited in the above-mentioned European search report.
The members are as contained in the European Patent Office EDP file on
The European Patent Office is in no way liable for these particulars which are merely given for the purpose of information.

01-12-2020

| Patent document cited in search report | | Publication date | Patent family member(s) | | Publication date |
|---|---|---|---|---|---|
| WO 2018211141 | A1 | 22-11-2018 | CN | 110892420 A | 17-03-2020 |
| | | | EP | 3593293 A1 | 15-01-2020 |
| | | | US | 2020090006 A1 | 19-03-2020 |
| | | | WO | 2018211141 A1 | 22-11-2018 |
| US 2020148215 | A1 | 14-05-2020 | US | 2020148215 A1 | 14-05-2020 |
| | | | WO | 2020098456 A1 | 22-05-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015144410 A1

**Non-patent literature cited in the description**

- **M. BOJARSKI et al.** End to end learning for self-driving cars. *arXiv: 1604.07316,* 2016, https://arxiv.org/abs/1604.07316
- **V. MNIH et al.** Human-level control through deep reinforcement learning. *Nature,* 2015, vol. 518, 529-533
- **R. HADSELL et al.** Learning long-range vision for autonomous off-road driving. *Journal of Field Robotics,* 2009, vol. 26, 120-144
- **W. LOTTER et al.** Deep predicting coding networks for video prediction and unsupervised learning. *arXiv: 1605.08104,* 2016, https://arxiv.org/abs/1605.08104
- **M. G. AZAR et al.** World discovery models. *arXiv:1902.07685,* 2019, https://arxiv.org/abs/1902.07685
- **K. CHO et al.** Learning Phrase Representations using RNN Encoder-Decoder for Statistical Machine Translation. *arXiv: 1406.1078,* 2014, https://arxiv.org/abs/1406.1078
- **D. P. KINGMA et al.** Adam: A Method for Stochastic Optimization. *arXiv: 1412.6980,* 2014, https://arxiv.org/abs/1412.6980